Europäisches Patentamt

European Patent Office

Office européen des brevets

(19)

(11) Veröffentlichungsnummer: **0 397 132**
**A2**

## (12) EUROPÄISCHE PATENTANMELDUNG

(21) Anmeldenummer: 90108720.5

(51) Int. Cl.⁵: **F16L 55/18**

(22) Anmeldetag: 09.05.90

(30) Priorität: 10.05.89 DE 8905806 U

(43) Veröffentlichungstag der Anmeldung:
14.11.90 Patentblatt 90/46

(84) Benannte Vertragsstaaten:
**AT DE DK GB**

(71) Anmelder: **BGV GES.FÜR
VERFAHRENSTECHNIK M.B.H.
Stemwarder Landstrasse 13
D-2000 Barsbüttel(DE)**

(72) Erfinder: **Wulff, Gerold, Dipl.-Ing.
Eichtalstrasse 3
D-2000 Hamburg 70(DE)**

(74) Vertreter: **Schmidt-Bogatzky, Jürgen, Dr. Ing.
et al
Schlossmühlendamm 4
D-2100 Hamburg 90(DE)**

(54) **Vorrichtung zum Entfernen von in den Innenraum von Rohren vorragende Bauteilen oder Materialeinziehungen.**

(57) Die Erfindung betrifft eine Vorrichtung zum Entfernen von in den Innenraum von Rohren ragenden Bauteilen oder Materialeinziehungen. Sie weist einen Laufwagen 4 auf, auf dem eine Hydraulikanlage 5 mit Hydrauliktank 6, Hydraulikpumpe 7 und Hydraulikventilen sowie ein Hydraulikzylinder 8 mit einer Stelleinrichtung 15 angeordnet ist. Der Hydraulikzylinder 8 ist kardanisch gelagert und rechtwinklig zur Längsachse 9 des Laufwagens 4 ausgerichtet. An der Unterseite 10 des Laufwagens 4 sind über dessen Länge im Abstand voneinander Laufräder oder Rollen 11 angeordnet. An den Endabschnitten 25,26 ist jeweils ein Anschlußglied für Zugmittel vorgesehen. Vor dem Hydraulikzylinder 8 kann auf dem Laufwagen 4 eine Fernsehkamera 23 angeordnet sein.

Fig.1

EP 0 397 132 A2

Xerox Copy Centre

Die Erfindung betrifft eine Vorrichtung zum Entfernen von in den Innenraum von Rohren vorragenden Bauteilen oder Materialeinziehungen.

Es ist bekannt, ältere Rohrleitungen durch Sanierung wieder gebrauchsfähig zu gestalten. Eine Möglichkeit der Sanierung besteht darin, daß in das altere Rohr ein neues Rohr eingezogen wird. Diese Sanierungsmethode eignet sich insbesondere für Versorgungsleitungen für Gas oder Wasser, da gegenüber einer Neuverlegung der Umfang der Erdarbeiten vermindert wird. Hierbei besteht das Problem, daß Verschlußstopfen stillgelegter älterer Leitungsanschlüsse dann entfernt werden müssen, wenn sie in den freien Querschnitt der Leitungen hineinragen. Die hierzu erforderlichen Erdarbeiten verteuern die Sanierungsarbeiten erheblich. In vielen Fällen wird bei einer Häufung von Verschlußstopfen eine Sanierung unmöglich, so daß die Leitung neu verlegt werden muß.

Die Aufgabe der Erfindung besteht darin, eine Vorrichtung zu schaffen, mittels derer auf einfache, kostengünstige und betriebssichere Weise in Rohrleitungen vorragende Verschlußstopfen und Materialeinziehungen wie Muffenansätze und örtliche Materialverdickungen beseitigt werden können.

Erfindungsgemäß erfolgt die Lösung der Aufgabe durch die kennzeichnenden Merkmale des Anspruchs 1. Ausgestaltungen der Erfindung werden in den abhängigen Ansprüchen beschrieben.

Die Erfindung wird nachstehend am Beispiel der in den Zeichnungen dargestellten Vorrichtung näher erläutert. Es zeigt:

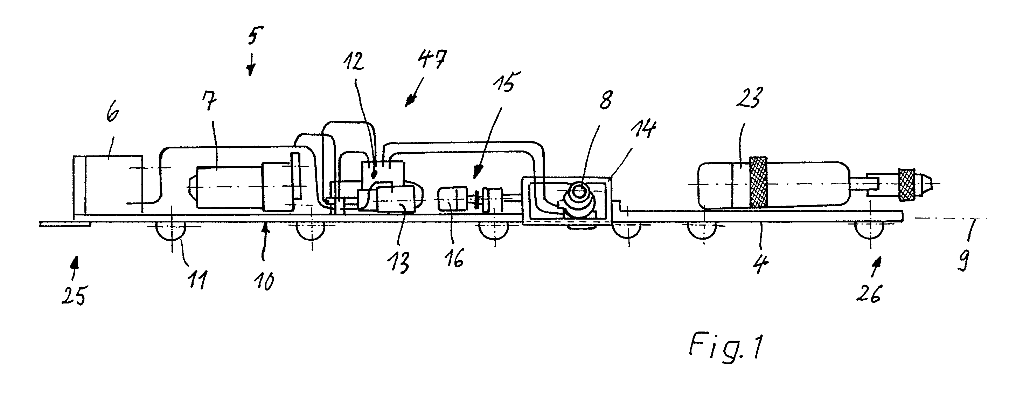

Fig. 1 die Vorrichtung in einer schematischen Seitenansicht,

Fig. 2 bis 4 den Hydraulikzylinder der Vorrichtung nach Fig. 1 in verschiedenen Betriebsstellungen,

Fig. 5 und 6 schematische Darstellungen eines Hydraulikzylinders in einer Seitenansicht im Schnitt.

Die Vorrichtung 1 weist einen Laufwagen 4 auf, der als gestrecktes Rahmengestell oder als gestrecktes Profilstück ausgebildet sein kann. An den Endabschnitten 25, 26 ist jeweils ein Anschlußglied für Zugmittel wie Seile, Ketten od. dgl. ausgebildet. An der Unterseite 10 des Laufwagens 4 sind über dessen Länge im Abstand voneinander Laufräder oder Rollen 11 angeordnet. Auf dem Laufwagen 4 ist eine Hydraulikanlage 5 vorgesehen, die mit einem Hydraulikzylinder 8 mit einer Stelleinrichtung 15 verbunden ist. Die Hydraulikanlage 5 besteht aus einem Hydrauliktank 6, einer Hydraulikpumpe 7 einem fernbedienbaren Wegeventil 12 sowie einem Sicherheitsventil 13, das mit dem Wegeventil 12 verbunden ist. Der Hydraulikzylinder 8 ist in einem auf dem Laufwagen 4 ausgebildeten Rahmen 14 kardanisch gelagert. Vor dem Hydraulikzylinder 8 befindet sich eine Fernsehkamera 23.

Der Hydraulikzylinder 8 ist rechtwinklig zur Längsachse 9 des Laufwagens 4 ausgerichtet. Als Stelleinrichtung 15 ist ein Stellmotor 16 vorgesehen, mittels dem der Hydraulikzylinder 8 schwenkbar ist. Der Stellmotor 16 kann als Elektromotor ausgebildet sein.

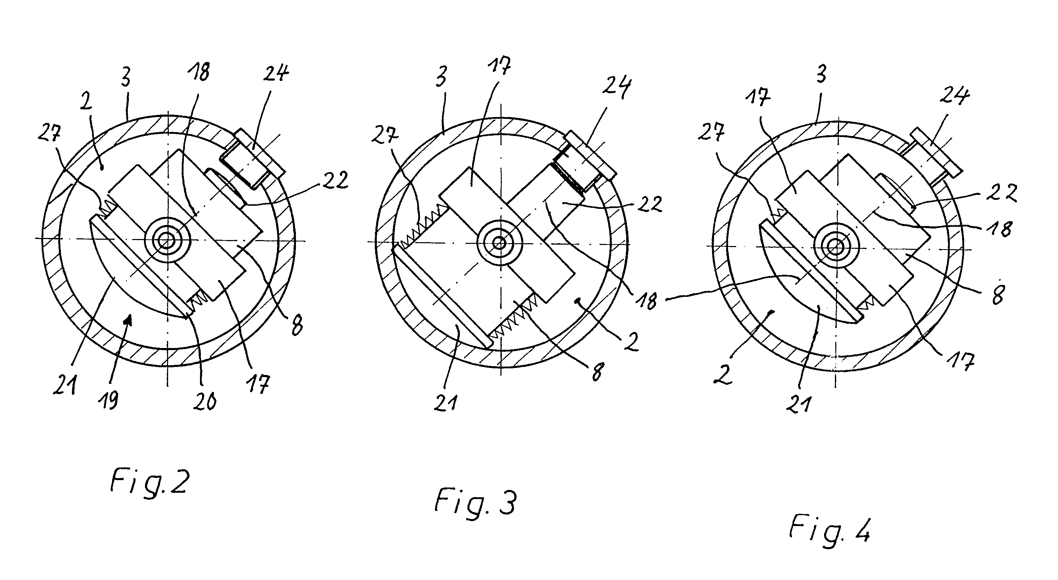

Der Hydraulikzylinder 8 wird mittels eines Halterings 17 gehalten, der in dem Rahmen 14 schwenkbar gelagert ist (Fig. 2 bis 4). In dem Haltering 17 ist der Hydraulikzylinder 8 koaxial zur Zylinderlängsachse 18 verschieblich gelagert. Der Hydraulikzylinder 8 weist einen ballig gewölbten Boden 19 auf. Der Boden 19 besteht aus einer Bodenplatte 20, die den Hydraulikzylinder 8 seitlich überragt. Auf der Bodenplatte 20 ist ein ballig gewölbter Vorsprung 21 ausgebildet, dessen Krümmung dem Innendurchmesser des Rohres 3 entspricht, in das die Vorrichtung 1 einführbar ist. Der Kolben 22 des Hydraulikzylinders 8 weist einen gegenüber dem Durchmesser des Hydraulikzylinders 8 stark verkleinerten Durchmesser auf.

Der Hydrauliktank 6 der Hydraulikanlage 5 ist so dimensioniert, daß er die Hydraulikflüssigkeit aufnehmen kann, die benötigt wird, um den Hydraulikzylinder 8 komplett ausfahren zu können. Die Hydraulikpumpe 7 wird vorzugsweise mit Gleichstrom betrieben, um Gefahren für das Bedienpersonal auszuschließen. Mittels des Wegeventils 12, das über ein Kabel fernbedient werden kann, wird die Auf- und Abbewegung des Hydraulikzylinders 8 gesteuert. Durch das Sicherheitsventil 13 wird der maximal zulässige Druck auch dann nicht überschritten, wenn der Hydraulikzylinder 8 an einen Anschlag fährt. Mittels des Stellmotors 16 ist es möglich, den Hydraulikzylinder 8 über die Mitte des Rohres 3 auf einen Verschlußstopfen 24 hin auszurichten. Zweckmäßig ist es, den Stellmotor 16 so auszubilden, daß der Hydraulikzylinder 8 innerhalb von zwei Anschlägen über ca. 270° im oberen Bereich des Rohres 3 ausgerichtet werden kann. Hierdurch ist es möglich, alle üblicherweise vorkommenden Verschlußstopfen 24 entfernen zu können. Wenn einzelne Verschlußstopfen 24 besonders fest sitzen oder größer sind als der Kolben 22, ist es möglich, mittels des Stellmotors 16 den Hydraulikzylinder 8 so auszurichten, daß der Kolben 22 zuerst auf der einen und dann auf der anderen Seite herausgedrückt wird. Der Betriebsablauf des Hydraulikzylinders 8 kann mittels der Fernsehkamera 23 beobachtet und gesteuert werden.

In den Fig. 2 bis 4 ist die Funktionsweise des Hydraulikzylinders 8 näher dargestellt. Fig. 2 zeigt den Hydraulikzylinder durch den Stellmotor 16 mit dem Kolben 22 auf einen Verschlußstopfen 24 ausgerichtet. Der Kolben 22 ist vollkommen in den Hydraulikzylinder 8 eingefahren. Der Verschlußstopfen 24 ragt in das Rohr 3. Danach wird der Kolben 22 soweit ausgefahren, bis er an dem Verschlußstopfen 24 anliegt und danach den Vorsprung 21 des Bodens 19 an dem gegenüberliegenden Innenwandabschnitt des Rohres fixiert. Danach wird der Hydraulikzylinder 8 mit dem vollen Hydraulikdruck beaufschlagt, so daß der Kolben 22 den Verschlußstopfen 24 aus dem Innenraum des Rohres 3 herausdrückt. Danach wird der Kolben 22 wieder in den Hydraulikzylinder 8 eingefahren, wobei sich der Hydraulikzylinder 8 innerhalb des Halterings 17 wieder in seine Ausgangsstellung bewegt (Fig. 4). Bei dieser beschriebenen Betriebsweise ist durch die kardanische Aufhängung des Hydraulikzylinders 8 sichergestellt, daß dieser sich stets einwandfrei selbst ausrichten kann.

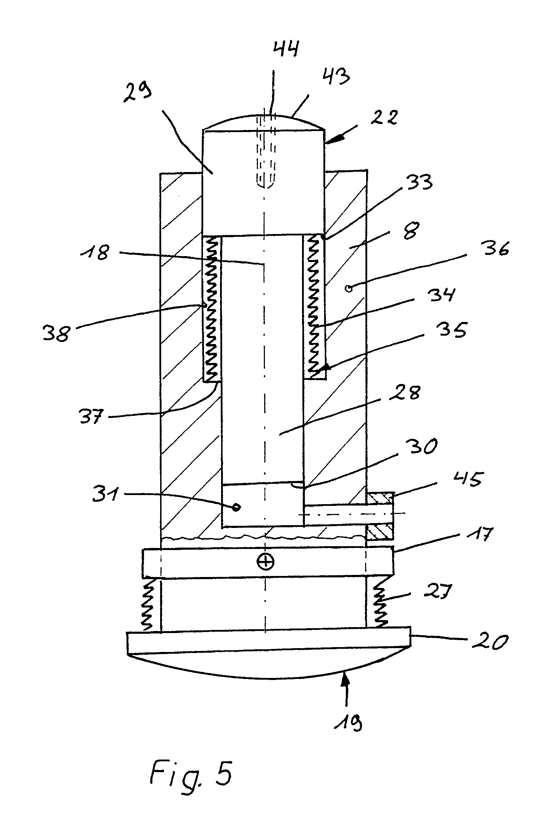

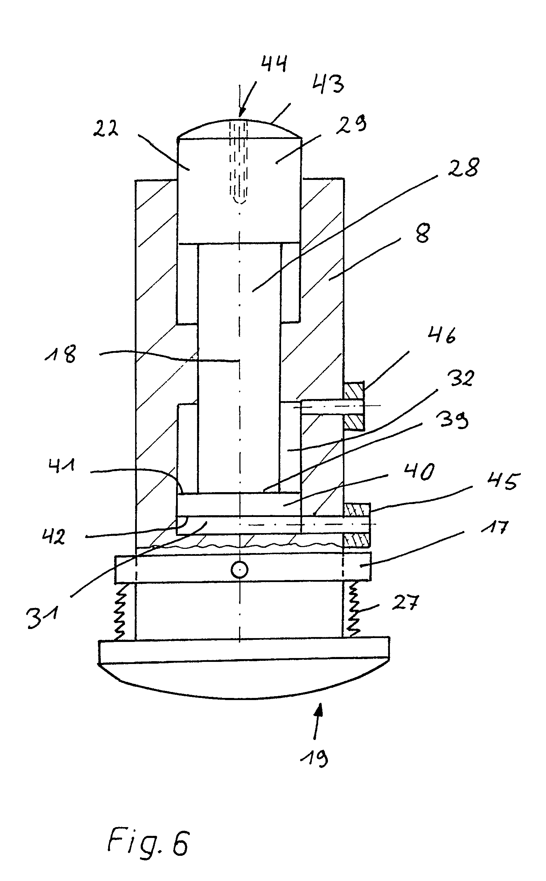

In den Fig. 5 und 6 sind zwei Hydraulikzylinder 8 schematisch dargestellt. Der Hydraulikzylinder 8 nach Fig. 5 ist insbesondere für Rohre 3 mit kleinerem Durchmesser geeignet, während der Hydraulikzylinder 8 nach Fig. 6 für Rohre 3 mit größerem Durchmesser vorgesehen ist. An dem Haltering 17 sind über den Umfang des Hydraulikzylinders 8 verteilt Zugfedern 27 angeordnet, die mit dem Boden 19 des Hydraulikzylinders 8 verbunden sind. Mittels dieser Zugfedern wird der Hydraulikzylinder 8 nach Ausstoßen eines Rohrstopfens 24 wieder in die in Fig. 4 dargestellte Ausgangslage gebracht.

Der Kolben 22 weist eine im Durchmesser verringerte Kolbenstange 28 auf. Deren dem Kolbenkopf 29 abgewandte Bodenfläche 30 ist mittels des Hydraulikfluids mit Druck beaufschlagbar (Fig. 5). Hierzu ist unterhalb der Bodenfläche 30 ein unterer Druckraum 31 ausgebildet, der mit dem Hydraulikanschlußstutzen 45 verbunden ist. An der zylinderrinnenseitigen Kreisringfläche des Kolbenkopfes 29 sind über den Umfang der Kolbenstange 28 verteilt Zugfedern 34 angeordnet. Die freien Endabschnitte 35 der Zugfedern 34 sind an einem an der Innenfläche 38 des Mantels 36 des Hydraulikzylinders 8 ausgebildeten Absatz 37 befestigt. Bei Druckentlastung im Druckraum 31 wird der Kolbenkopf 29 mittels der Zugfedern 34 wieder in den Innenraum des Hydraulikzylinders 8 zurückgezogen bis er die in Fig. 4 dargestellte Ausgangsstellung erreicht hat.

Bei dem Hydraulikzylinder 8 nach Fig. 6 wird die Verschiebung des Kolbenkopfes 29 nur mittels des Drucks des Hydraulikfluids gesteuert. Hierzu ist an dem dem Kolbenkopf 29 abgewandten Endabschnitt 39 der Kolbenstange 28 eine Kolbenplatte 40 vorgesehen, die in einer Ausnehmung des Hydraulikzylinders 8 koaxial zur Zylinderlängsachse 19 verfahrbar ist. Der Druckraum 32 über der oberen Druckfläche 41 ist mit einem Hydraulikanschlußstutzen 46 verbunden. Die untere Druckfläche 42 der Kolbenplatte 40 ist dem unteren Druckraum 31 zugewandt, der mit einem Hydraulikanschlußstutzen 45 verbunden ist.

Um eine möglichst große Einsatzflexibilität des Hydraulikzylinders 8 bei unterschiedlichen Durchmessern zu erzielen, ist es möglich, den Kolben 22 verlängerbar auszubilden. Hierzu kann der Kolben 22 teleskopierbar ausgebildet sein. Es ist aber auch möglich, am oberen Endabschnitt des Kolbens 22 ein Anschlußglied für ein Kolbenverlängerungsstück vorzusehen. Hierzu kann beispielsweise in der Kopffläche 43 des Kolbens 22 eine sacklochartige Gewindebohrung 44 vorgesehen sein. Mittels einer in die Gewindebohrung 44 einzuführenden Schraube kann das Kolbenverlängerungsstück an der Kopffläche 43 befestigt werden.

Mit der beschriebenen Vorrichtung 1 ist es auch möglich, das Rohr 3 zu zerdrücken, wenn z. B. vorstehende Gußfehler oder Verengungen an Muffen beseitigt werden sollen.

## Ansprüche

1. Vorrichtung zum Entfernen von in den Innenraum von Rohren vorragenden Bauteilen oder Materialeinziehungen, mit einer Hydraulikanlage (5) mit Hydrauliktank (6), einer Hydraulikpumpe (7) und Hydraulikventilen und einem radial zur Rohrlängsachse verschieblichen Zerkleinerungsstößel, gekennzeichnet durch einen Laufwagen (4), der als gestrecktes Rahmengestell oder als gestrecktes Profilstück mit endabschnittseitig angeordneten Anschlußgliedern für Zugmittel ausgebildet ist, wobei an der Unterseite (10) des Laufwagens (4) über dessen Länge im Abstand voneinander Laufräder oder Rollen (11) angeordnet und auf der Oberseite (47) des Laufwagens (4) die Hydraulikanlage (5) mit einem in einem auf dem Laufwagen (4) ausgebildeten Rahmen (14) kardanisch gelagerten Hydraulikzylinder (8) mit einer Stelleinrichtung (15) und mit einem zwischen Hydraulikpumpe (7) und Hydraulikzylinder (8) geschalteten Wegeventil (12) angeordnet ist.

2. Vorrichtung nach Anspruch 1, dadurch gekennzeichnet, daß an der Hydraulikpumpe (7) ein Sicherheitsventil (13) angeordnet ist.

3. Vorrichtung nach Anspruch 1, dadurch gekennzeichnet, daß die Stelleinrichtung (15) als auf dem Laufwagen (4) angeordneter Stellmotor (16) ausgebildet ist, mittels dem der Hydraulikzylinder (8) schwenkbar ist.

4. Vorrichtung nach Anspruch 3, dadurch gekennzeichnet, daß der Stellmotor (16) als Elektromotor ausgebildet ist.

5. Vorrichtung nach Anspruch 1, dadurch gekennzeichnet, daß der Hydraulikzylinder (8) in einem in dem Rahmen (14) schwenkbar gelagerten Haltering (17) koaxial zur Zylinderlängsachse (18) verschieblich gelagert ist und einen ballig gewölbten Boden (19) aufweist.

6. Vorrichtung nach Anspruch 5, dadurch gekennzeichnet, daß der Boden (19) aus einer Bodenplatte (20) besteht, auf der ein ballig gewölbter Vorsprung (21) ausgebildet ist, dessen Krümmung dem Innendurchmesser des Rohres (3) entspricht, in das die Vorrichtung (1) einführbar ist.

7. Vorrichtung nach Anspruch 5 und 6, dadurch gekennzeichnet, daß die Bodenplatte (20) quadratisch oder rechteckig ausgebildet und der Vorsprung (21) als Zylindermantelsegment ausgebildet ist.

8. Vorrichtung nach Anspruch 5 bis 7, dadurch gekennzeichnet, daß der Kolben (22) des Hydraulikzylinders (8) einen gegenüber dem Durchmesser des Hydraulikzylinders (8) stark verkleinerten Durchmesser aufweist.

9. Vorrichtung nach Anspruch 5, dadurch gekennzeichnet, daß der Boden (19) mittels einer Zugfeder mit dem Haltering (17) verbunden ist.

10. Vorrichtung nach Anspruch 5, dadurch gekennzeichnet, daß der Boden (19) mittels auf dem Umfang des Hydraulikzylinders (8) angeordneter Zugfedern (27) mit dem Haltering (17) verbunden ist.

11. Vorrichtung nach Anspruch 8, dadurch gekennzeichnet, daß der Kolben (22) innerhalb des Hydraulikzylinders (8) eine im Durchmesser verringerte Kolbenstange (28) aufweist, deren dem Kolbenkopf (29) abgewandte Bodenfläche (30) mittels des Hydraulikfluids mit Druck beaufschlagbar ist, und daß an der zylinderinnerseitigen Kreisringfläche (33) des Kolbenkopfes (29) mindestens eine Zugfeder (34) angeordnet ist, deren freier Endabschnitt (35) an dem Mantel (36) des Hydraulikzylinders (8) befestigt ist.

12. Vorrichtung nach Anspruch 11, dadurch gekennzeichnet, daß die mindestens eine Zugfeder (34) an einem Absatz (37) der Innenfläche (38) des Mantels (36) des Hydraulikzylinders (8) befestigt ist.

13. Vorrichtung nach Anspruch 9, dadurch gekennzeichnet, daß der Kolben (22) innerhalb des Hydraulikzylinders (8) eine im Durchmesser verringerte Kolbenstange (28) aufweist, an deren dem Kolbenkopf (29) abgewandtem Endabschnitt (39) eine Kolbenplatte (40) angeordnet ist, deren obere und untere Druckfläche (41, 42) wechselweise mittels des Hydraulikfluids mit Druck beaufschlagbar ist.

14. Vorrichtung nach Anspruch 8, dadurch gekennzeichnet, daß der Kolben (22) teleskopierbar ausgebildet ist.

15. Vorrichtung nach Anspruch 8, dadurch gekennzeichnet, daß an dem oberen Endabschnitt des Kolbens (22) ein Anschlußglied für ein Kolbenverlängerungsstück ausgebildet ist.

16. Vorrichtung nach Anspruch 15, dadurch gekennzeichnet, daß in der Kopffläche (43) des Kolbens (22) eine sacklochartige Gewindebohrung (44) ausgebildet ist, in die eine Schraube zur Befestigung des Kolbenverlängerungsstücks einschraubbar ist.

Fig.1

Fig.2

Fig. 3

Fig. 4

EP 0 397 132 A2

Fig. 5

Fig. 6